# EUROPEAN PATENT APPLICATION

(11) **EP 4 206 480 A1**
(43) Date of publication of application: **05.07.2023**
(21) Application number: 22216127.5
(22) Date of filing: 22.12.2022
(51) Int. Cl.: F15B 19/00

(54) **METHOD FOR DETECTING INTERNAL AND EXTERNAL LEAKS FOR A HYDRAULIC ACTUATOR**

(30) Priority: 22.12.2021 IT 202100032327
(71) Applicant: Fluid Overland, 10128 Torino (TO) (IT)
(72) Inventor: Giamboi, Carmelo, 10128 Torino (TO) (IT)
(74) Representative: Mola, Edoardo

(57) **Abstract**

A leak detection method for at least one hydraulic actuator (D) comprises the steps of:
- performing on a calibration circuit comprising a pump (P) and a pressure branch (RM) connected to the pressure side of the pump (P) an initial measurement of the flow rate in the pressure branch (RM), the flow rate generating a pressure in the pressure branch (RM) by passing through a restriction;
- connecting fluidically the pressure branch (RM) to a port of the hydraulic actuator (D) arranged in a blocking position while the pressure branch (RM) is crossed by the flow; take a second measurement of the flow rate generated by the pump (P) while the pressure branch (RM) is fluidically connected to said port;
- determining whether there is a leakage on the basis of the comparison of the first and second flow measurement.

## Description

### TECHNICAL FIELD

The present invention relates to the field of fluid-dynamic circuits.

In particular, the present invention relates to a method, and related apparatus, for the remote leakage detection in fluid dynamic circuits.

More precisely, the present invention relates to a method, and apparatus thereof, for the remote leakage detection in automated fluid dynamic circuits such as in the processing lines in the automotive industry, railways for the management of braking systems, aeronautics for the control management of various actuators hydraulic, naval, military and special machines.

The object of the present invention can be also used in control management on aqueducts and hydraulic oil pipelines, and in all those systems that use pressurised fluids.

The present invention is preferably, but not exclusively, directed to identifying both internal leakage, e.g. leakage occurring within a linear actuator in the passage of fluid from one chamber to an adjacent chamber, and external leakage, i.e. leakage of fluid to the external environment of the circuit, as well as fluid leakage, whether microscopic, i.e. a few drops of fluid, or macroscopic, e.g. leakage ranging from the order of litres to cubic metres of fluid, to the utilities forming part of the aforementioned circuits fluid-dynamic circuits.

### BACKGROUND ART

In the management of industrial automated plants using pressurised fluids, particularly in the automotive, hot stamping steel, shipbuilding, earthmoving, military and aerospace, fluid leakage occurs routinely, specifically hydraulic fluids, specifically hydraulic oil.

These leakage can be due to either internal leakage, caused by degradation of the sealing elements of the various actuators and components, as well as external leakage, caused by the loosening of the fastenings on the circuits of these actuators and components and/or micro porosity of the same, and, more generally, to general, to faults or breaks in hydraulic circuits.

In some cases, for example where there is a very large number of consumers, the hydraulic oil supply system to such utilities may be oversized compared to the actual operational needs, in order to compensate for leakages and ensure the continuity of operation of the production lines or, more generally, of the plant.

In extreme cases, failing to adequately compensate hydraulic oil leakage, this could lead to plant downtime, resulting in significant economic damage.

In today's industrial scenario, having established the presence of leakage, with the purpose of not interrupting operation of the plant, specifically the production lines, the only solution is to manually refill hydraulic oil; this solution, of course, entails a significant operating cost and a considerable environmental impact since the quantities of hydraulic oil concerned, for example in a system of production lines for an automotive plant, can be in the order of 5-10 m^3/year.

### BRIEF DESCRIPTION OF THE INVENTION

The present invention, starting from the notion of the drawbacks and lacks the known art, intends to remedy them.

The present invention primarily intends to solve and eliminate the problems of disposing of large quantities of hydraulic oil and the subsequent manual refilling in the plant, with a considerable reduction in operating costs.

The present invention generally intends to solve and eliminate the problem of leakage of hydraulic oil in hydraulic circuits.

In particular, the present invention intends to solve and eliminate the problem of leakage both internal and external to utilities installed in hydraulic circuits, specifically of production lines.

The present invention further intends to solve and eliminate the problems of identifying and quantifying detected hydraulic leaks.

In addition, the present invention intends to solve and eliminate the problem of having to carry out manual maintenance interventions aimed to refill quantities of hydraulic oil to compensate for detected leaks.

The present invention therefore proposes to provide:
- a method for detecting leakage of hydraulic oil in fluid dynamic circuits;
- an accurate method for the remote detection of leakage, their localisation and quantification even in cases where such leakage are very small, i.e. microscopic leaks;
- a method also capable of automatically replenish detected leaks;
- a method that, in particular, allows to detect leaks both internal and external to the utilities installed in hydraulic circuits, specifically of production lines;
- a reliable method that is free from false leakage detection as it pinpoints the position of each leakage detected, which also allows timely and punctual maintenance interventions;
- a fast and non-destructive method;
- an inexpensive method that can be easily used on any type of fluid-dynamic circuit, even in locations that cannot be easily reached, as well as the related equipment, which in turn is simple to use, inexpensive to construct, operate and maintain, and also easily implemented to be operated in semi-automatic or fully automatic mode and also in a programmed mode with programming via remote management software.

It is a further purpose of the invention to provide a method, and related equipment which provides for the possibility of detecting leaks even of very small quantity.

It is a further purpose of the invention to provide a method, and apparatus therefor, which provides for the possibility of quantifying the magnitude of the detected leakage.

It is a further purpose of the invention to provide a method, and apparatus therefor, which provides for the possibility of quantifying detected losses automatically.

In view of these purposes, the present invention provides a method, and apparatus therefor having, respectively, the characteristics of the appended claims and, to which reference is made for the sake of brevity exposition.

It is also an object of the present invention, possibly independent and usable autonomously compared to the other aspects of the invention, a method, and related apparatus, for quantifying the losses detected.

Further detailed advantageous technical features of the method and related apparatus and their specific application for hydraulic circuits of automation lines, according to the present invention, are described in the corresponding dependent claims. The aforementioned claims, hereinafter referred to, are intended to form integrating part of the present description. As will be apparent from the detailed description below, the method and related apparatus according to the present invention, have significant advantages; in particular, the method and related apparatus according to the present invention achieve a significant reduction in operating costs together with significantly less environmental pollution.

The purpose of the present invention is achieved by means of a leakage detection method of at least a hydraulic actuator comprising the steps of:
- performing on a calibration circuit comprising a pump and a pressure branch connected to the pressure side of the pump an initial measurement of the flow rate in the pressure branch, the flow rate by generating a pressure in the supply branch by passing through a restriction;
- connecting fluidically the pressure branch to a port of the hydraulic actuator arranged in a blocking position while the pressure branch is crossed by the flow;
- performing a second measurement of the flow rate generated by the pump while the pressure branch is fluidically connected to said port;
- determining whether there is a leakage based on the comparison between the first and second flow measurement.

In this way, a simple flow measurement compared with a reference value, i.e. a differential flow measurement, allows to detect a leak without having to consider the density of the hydraulic fluid, temperature and other parameters that may vary over time. In fact, since the flow rate reference value measured just before the second flow rate value, the various effects listed above are cancelled out as the relevant parameters have constant values during both during the first and during the second measurement.

A further purpose of the present invention is achieved by a method comprising the step of receiving a pressure value in the pressure branch and the fact that the pump is controlled to maintain constant said pressure value during the measurements of the first and second flow rates.

This pressure value can be the work of the cylinder e.g. when a cycle is carried out pressing of a product or semifinished product in case the cylinder is mounted on a pressing machine.

A further purpose of the present invention is achieved by a method comprising the further steps of:
- providing a further actuator connected to said pressure branch in parallel with the at least one hydraulic actuator compared to said pressure branch;
- fluidically connecting according to a predetermined sequence the at least one hydraulic actuator or the further actuator to said pressure branch;
- performing differential flow rate measurement steps for each actuator;
- when a leak is detected, generating a signal comprising an identification code for the one between the at least one hydraulic actuator and the further hydraulic actuator connected to said pressure branch.

In this way, several actuators can be tested for example by means of an automatic cycle.

A further purpose of the present invention is achieved by a method, in which the calibration circuit is connected to at least one actuator and further actuator via a main valve of distribution valve receiving as input a pressure signal from the calibration circuit and at least a first and a second distribution valve connected at the input to the main distribution valve to receive alternatively said pressure signal and selectively connected at the output to said actuators so that, for each position combination of the corresponding main and secondary valves is fluidically connected to the calibration circuit an actuator to be tested and in so that each of said combinations defines a step in said predetermined sequence.

The combination of a main distribution valve controlling several secondary distribution valves makes it possible to increase to a few dozen actuators that can be tested one by one in sequence via a single pressure branch. At each position of the main distribution slide valve corresponds to a secondary distribution valve unit in turn connected to a plurality of actuators. Preferably, each combination of slide valve positions corresponds to the fluidic connection of only one actuator at a time to the pressure branch.

A further purpose of the present invention is achieved by a method, in which the pressure signal is transferred via at least one first line through said main and secondary distribution valves and there is a first pressure sensor along the first line interposed between the supply branch and the distribution valve, and comprising the step of identifying a reference position of the slide valve based on the measurement of the first pressure sensor, the said sequence identifying a known sequence of said actuators starting from said reference position for realise an open-loop identification of the actuator tested on the basis of counting the movements of the slide valve from the reference position.

In this way, it is possible to control the testing of a large number of actuators by means of an essentially hydraulic circuit and procedure, thus making it possible to avoid or reduce the number of electronic sensors that could be damaged quite easily in a production plant with numerous hydraulic actuators.

A further purpose of the present invention is achieved by a method, wherein at least one of the main and secondary distribution valves comprises at least one seal between the corresponding slide valve and valve body; the seal seals selectively the first line; and comprising the steps of pressurising said seal to seal the first line when the corresponding slide valve is stationary and, for example, the first and second flow rates are measured and to releasing said seal before handling the slide valve.

Seals are important to minimise leaks in the test circuit so as to identify actuator leakage only. Since even very high test pressures are achievable, e.g. between 70 and 100 bar, i.e. the working pressures of the actuators, the seals are pressurised during the tests and depressurised to move the slides valve in so as to avoid damage due to friction generated during the movement of the slide valve.

A further purpose of the present invention is achieved by a method, in which at least one actuator is double-acting; the first line connects the discharge branch to a first chamber of the actuator and a second line connects the discharge branch to the second chamber of the actuator; there is a second pressure sensor along the second line interposed between the pressure branch and the distribution valve; there is a first and second shut-off valve along the corresponding first and second line interposed between the corresponding first and second pressure sensor and the pressure branch; wherein the said phase of connecting comprises the phases of closing one of the first and second stop valves and keeping open the other one between the first and second shut-off valves to transfer said pressure signal from said pressure branch to one between the first and second chambers and determine whether there is a leakage between the first and second chambers on the basis of the time course of the pressure values measured by the first and second pressure sensors.

By means of the present invention it is also possible detect a leakage of the internal seal of the double-acting cylinder separating the two chambers.

A further purpose of the present invention is achieved by a method, wherein the pump has a fixed displacement and the first and second flow rate measurements are performed by a measurement of the number of revolutions of the pump.

In this way, the flow rate measurement is both precise and relatively inexpensive.

A further purpose of the present invention is achieved by a method, wherein the at least one actuator is controlled by means of a control valve to perform a work operation, the control valve being connected in parallel to the calibration circuit compared to the at least one actuator and comprising the step of fluidically isolating the control valve from the at least one actuator while first and second bridge measurements are performed. The test circuit is pneumatically installed and during each test, the neck valve, which controls the actuator in work cycles, e.g. in pressing cycles, must be fluidically disconnected from the actuator so that the circuit of the hydraulic machine, e.g. of the press machine, does not interfere with the test conditions and is not damaged, in addition, is not possibly damaged by the connections applied during testing.

### BRIEF DESCRIPTIONS OF THE DRAWINGS

The present invention, together with its purposes and advantages, will be more evident from the following detailed description of the preferred embodiment of the method and the relative apparatus herein exclusively, given by way of illustration and example, but not limited to, with reference to the drawing tables attached, which are also provided as examples only.

For a better understanding of the present invention, the invention will be further described with reference to the appended figures wherein:
- Fig.1 shows a general fluidic diagram of a first example of a preferred embodiment of the present invention relating to a single-acting cylinder circuit;
- Fig.2 shows a general fluidic diagram of a second example of a preferred embodiment of the present invention relating to a circuit with a double-acting cylinder;
- Fig.3 shows a general fluidic schematic diagram of a third example of a preferred embodiment of the present invention, with a configuration of a multi-user "master" and "slave" type;
- Fig.4A shows a front view of a distribution unit employed in the fluidic schemes of Figs.1-3;
- Fig.4B shows a longitudinal sectional view of the Fig.4B shows a longitudinal sectional view of the distribution manifold of Fig.4A;
- Fig.4C shows a through longitudinal sectional view of the longitudinal cross-sectional view of the assembly of Fig. 4A in a plane parallel to and spaced from that of Fig. 4B;
- Fig.5 shows a longitudinal sectional view of the slide valve illustrated in Fig.4A;
- Fig.6A shows a frontal view of a slide valve illustrated in Fig.4A;
- Fig.6B shows a sectional view, executed in a plane whose mark is indicated with 4 of the slide valve in Fig.6A;
- Fig.7 shows an enlargement of the view of Fig.6B;
- Fig.8 shows a cross-sectional view of the distribution unit of figure 4, executed in a plane perpendicular to the rotation axis of the slide valve;
- Fig.9 shows a frontal cross-sectional view of a further distribution valve 80 used in the fluidic scheme of figure 3;
- Fig.10 shows a valve block that can be used in the diagrams of Figs.1-3;
- Fig.ll shows a top view of the block in Fig.10;
- Fig.12 shows a sectional view of the T-joints;

These drawings illustrate different issues and embodiments of the present invention and, where applicable, similar structures, components, materials and/or elements are shown in different figures with the same numerical references.

### DETAILED DESCRIPTION OF THE INVENTION AND SOME PREFERRED

### EMBODIMENTS

The Fig.l shows, as a whole, the schematic general diagram of a test circuit 1 connected via a distribution circuit 6, to a machine circuit 2 configured to realise the present invention according to a first embodiment in which it is necessary to test a simple effect actuator D1.

In particular, machine circuit 2 is a circuit e.g. mounted on board a hydraulic operating machine, e.g. a sheet-metal forming press, and comprising hydraulic ducts and at least one VC control solenoid valve, e.g. actuated via a control user interface or via a programmable electromechanical control, to control production operations such as sheet-metal forming, performed on the press.

Test circuit 1, illustrated in Fig.l, comprises:
- a calibration circuit 3 comprising a fixed-displacement pump unit 4 with a revolution counter and a calibrated set screw 5 for applying a known load to the pump assembly 4;
- a distribution circuit 6 connected to a machine circuit 2 and pressurised via the calibration circuit 3; an actuator D1; i.e. a single-acting linear cylinder, connected to both the machine circuit 2 and the test circuit 1 via the distribution circuit 6 so that circuits 1 and 2 are in parallel with respect to the actuator D itself.

In particular, the calibration circuit 3 comprises:
- a pump unit 4 comprising a fixed displacement pump P, e.g. a gear pump, which draws a flow rate, via a suction branch RA, from a tank S and suitable for pressurising a pressure branch RM of said calibration circuit 3 via a grub screw 5, at pressure values set by the user by adjusting of the number of revolutions and volumetric flow rates delivered by the pump P, e.g. 70 bar at 300 rpm; and an electric motor M, e.g. an electric motor of brushless type, coupled to a shaft of the pump P and capable of driving in rotation the pump P.

In particular, the pump 4 is controlled in pressure, i.e. it ensures the maintenance of the pressure at a constant and predetermined value in the test circuit 1 by means of a known electronic control e.g. based on the measurement of the pressure side of the pump and subsequent modification of the number of revolutions of the pump to maintain a predefined pressure;
- a tank S containing the fluid, e.g. hydraulic oil;
- a calibrated grub screw C that defines a known passage for the fluid and allows achieve user-defined pressure values in the pressure branch RM by changing of the electric motor speed M;
- A pressure relief valve VM positioned on the pressure branch RM and is designed to limit the maximum pressure reached by the fluid within a predetermined limit value;
- A filter F positioned after the VM valve along the pressure branch RM for filtering the fluid;
- A pressure sensor X1 to measure the pressure on pressure branch 7 of pump P;
- A non-return valve VN positioned on the pressure branch RM before the pressure sensor X1 to prevent the fluid from reversing its flow and return to pump P;

There is also a distribution circuit 6 which connects calibration circuit 3 with the machine circuit 2, i.e. on board the hydraulic machine to be controlled, and comprising a first pressurisation line L1 and a second pressurisation line L2 connected in parallel to the calibration circuit 3 and supplied by the pressure branch 7 of the pump unit 4 of the calibration circuit 3.

At the other end, the pressurising lines L1, L2 are respectively connected to a free chamber A while line L2 is closed by means of a grub screw (not illustrated) in the case of single-acting linear cylinder D1, as illustrated in Fig.l. Along each pressurisation line L1, L2 are also a respective valve EVI, EV2 and a respective pressure sensor X1.

In particular, the pressurisation lines L1, L2 comprise appropriate flexible pipe sections with rigid end portions at their respective ends and suitable for connection with hydraulic elements; corresponding control valves EVI, EV2; and sensors for the measurement of fluid-dynamic parameters, e.g. corresponding pressure sensors X2, X3.

According to the present embodiment illustrated in Fig.l, at the VC electro valve are engaged and integrated inside it non-return valves 9 and 10, held open by elastic elements, preferably springs; and designed to close against the action of the springs in a sealed manner the machine circuit 2 from the fluid under pressure, in order to isolate it hydraulically from the test circuit 1 during the pressurisation phase and subsequent comparison of the measured pressure value with the feedback value of the calibration circuit 3, of machine circuit 2.

In particular, in accordance with a non-restrictive form, the check valves 9, 10 are merged to the solenoid valve VC and are normally opened by corresponding springs. By means of pilot channels (not illustrated) the non-return valves 9, 10, when joined to the electro valve VC, close automatically counteracting the action of the springs when the pressurised lines L1, L2 are under pressure.

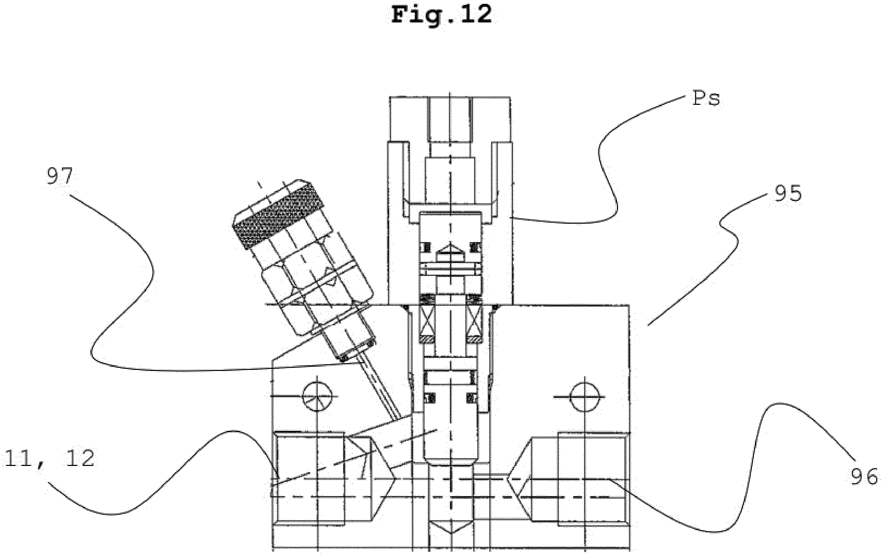

Each non-return valve 9, 10 is connected to the corresponding pressurised line L1, L2 by means of appropriate T-joints illustrated in Fig.12.

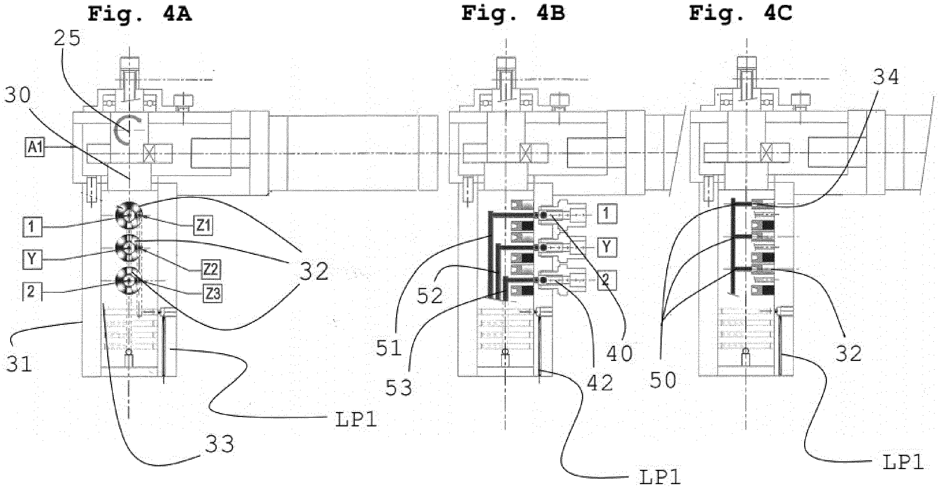

Advantageously, by operating non-return valves 9, 10, i.e. by applying hydraulic pressure on the corresponding shutters against the springs, it is possible to hydraulically disengage the machine circuit 2 from test circuit 1 and actuator D1 from actuator lines 11, 12 to be tested. In particular, the disconnection of the machine circuit is performed at the pressurisation of the lines L1 and L2 which, even in the absence of flow by pressurising an appropriate mechanism (not illustrated) that closes the non-return valves 9, 10. The non-return valves 9, 10 incorporated in VC, are closed by the pressure signal governed via port Y (illustrated in Fig.4B).

In addition, the regulation, distribution and control elements of the fluid operating in the circuit subject matter of the present invention, i.e. the electro-valves represent the electronically controlled part of the system as they are equipped with electromagnetic elements, e.g. solenoids, while the structural parts of the system, e.g. blocks, piping filters, pumps and fittings represent the hydraulic part.

In particular, the electronic elements mentioned above are operated by means of a control unit U (not shown in the figure), e.g. an electronic control unit, which activates and deactivates the moving parts inside the valves depending on the steps of the method, and performs calculation operations of the fluid-dynamic process parameters of the system, e.g. pressure number of revolutions and volumetric flow rate also on the basis of input data received from pressure sensors.

### Single-acting cylinder test

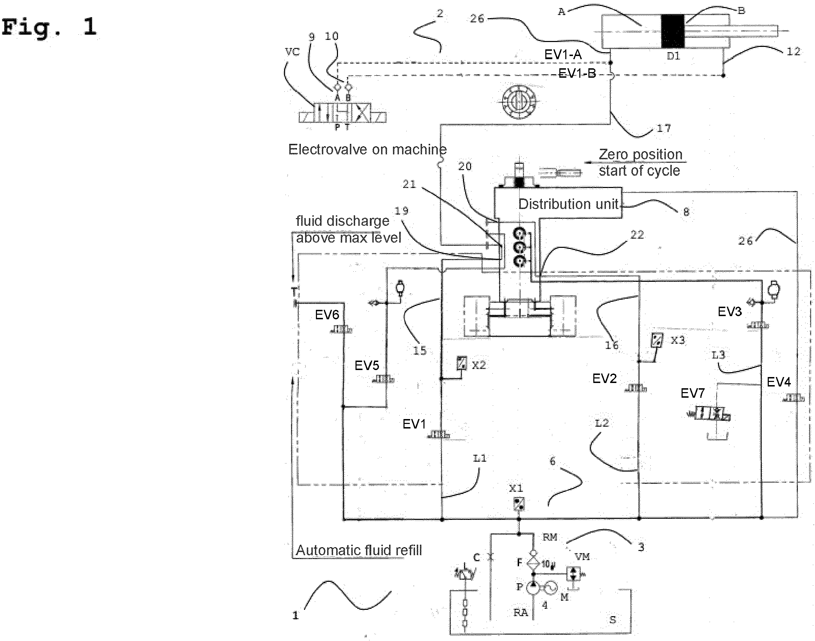

According to a first embodiment of the present invention illustrated in Fig.1, in the first step of the method, with the piston rod of the single-acting effect cylinder D1 in the end position, i.e. in mechanical stop at the rod chamber piston rod B of the cylinder D1, the calibration circuit 2 is pressurised to a test pressure of, for example the working pressure of the D1 cylinder, via increasing the speed of the pump unit 4, and keeping the valves EV1 and EV2 closed and thus isolating the distribution circuit 6, in relation to the machine circuit 2, thus obtaining a set speed at the test pressure. Once the test pressure, measured by means of pressure sensor X1, has been reached, valve EV2 is opened while pump 4 runs, keeping the remaining part of the circuit closed, and it is observed whether there is any change in the number of revolutions of pump 4. If this number of revolutions of pump 4 increases, this indicates that there is an hydraulic oil leakage downstream of the EV1 valve, whereas otherwise there is no fluid leakage and the circuit is perfectly tight. This method allows, in addition to detecting any fluid leakage, by varying the number of revolutions of pump P, also the precise quantification of this fluid loss detected through the mathematical relationship linking the volumetric flow rate of pump P to the speed of rotation and the displacement of pump P itself. In this way one has the possibility of accurately calculating the volume in m^3 of fluid leaked from the circuit and drawn between the chambers of the D1 cylinder, i.e. lost.

### Double-acting cylinder test

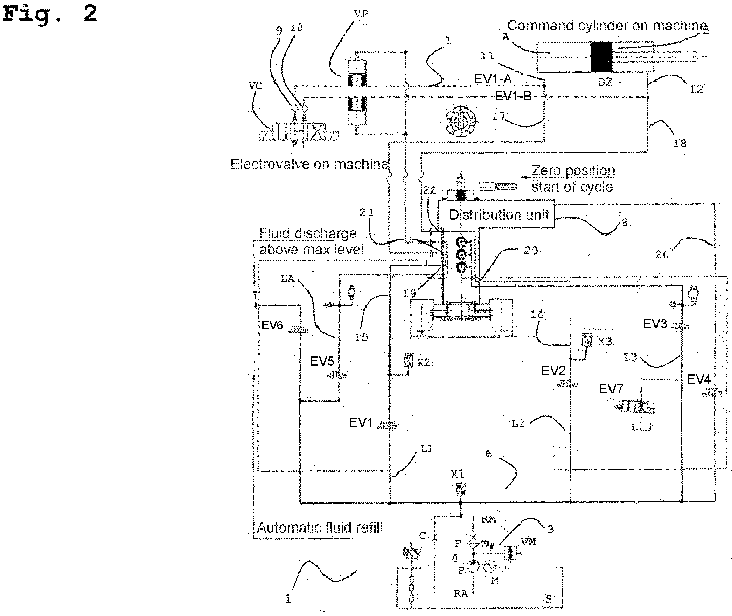

Fig.2 shows a general fluidic diagram of a second preferred embodiment, and to it all the elements and functions described in Fig.l.

In addition, the fluidic scheme illustrated in Fig.2 comprises:
a double-acting effect cylinder D2, i.e. a linear cylinder with two supply ports and corresponding chambers A on the base side and B on the piston rod; and an actuator line 12 connecting valve 8 to one of the chambers A, B, the other chamber being connected to valve 8 via actuator line 11.

In particular, when the cylinder D2 connected to the test circuit is double-acting, the same procedure is followed as in precedence, but the connection difference in the cylinder chambers must be monitored. As shown in Fig.2, the connection lines L1 and L2 are monitored in the respective connection valleys by the pressure sensors X2 and X3 positioned between the corresponding valves EVI, EV2 and the actuator.

Advantageously, said sensors X2 and X3 measure the pressure in the chambers A and B of a double-acting cylinder, i.e. in the base and the annular or rod side of the cylinder D2, and the control unit U is programmed to compare the measured values with each other and also with the value measured by the pressure sensor X1. Subsequently, depending on the pressure values measured by the pressure sensors X1, X2 and X3, it is possible to trace the presence or absence of a fluid leak by analysing the following two scenarios:
- If the number of rotation of pump 4 change, i.e. does not stay constant and in particular increase, before and after the connection of the calibration circuit to the test circuit, than the leakage is located in the connection circuit and the quantification is carried out by means of the relationship mentioned above for the case of the single-acting cylinder,
- If the speed of pump 4 remains constant, between the calibration circuit and the test circuit, but the ratio of pressures X2 and X3, then the leakage is localised in the cylinder seal bands, i.e. between the two chambers A and B, and is therefore an internal leakage of an internal type.

Advantageously, in the latter case, the quantification of fluid losses is done by means of an empirical model that relates the value of the ratio between pressures X2 and X3 and an estimate of the flow rate drawn in the unit of time derived from previously performed experimental tests.

In particular, pump unit 4 pressurises the pressurisation line L1 and thus opens the valve EV1 while simultaneously keeping the valve EV2 closed. It is then observed whether in chamber A or B of the linear cylinder D1 the pressure is zero. If this is the case, it means that the cylinder D1 is in an end position, i.e. with the piston in mechanical stop at the end surfaces, and when this occurs, the control unit U takes action, reversing the position of the valves EV1 and EV2, i.e. closes EV1 and opens EV2 in order to re-establish the balance of the pressures present in the A and B chambers of the D1 cylinder. Also via the control unit U, it is verified that the ratio between the pressures measured by the pressure sensors X2 and X3 respectively, remains constant. However, in the case of no leakage, both the relationship between the pressures in the cylinder chambers and the pump speed P remain constant in the time before and after connection. Once the leakage test has been carried out through the test circuit 1, the actuator D2 is reconnected to machine circuit 2 via the reopening via the springs of the non-return valves 9, 10 and is then controlled again by the electro-valve VC (via ports P, T, A, B as illustrated in Fig. 1) . Ports A, B are connected to the non-return valves 9, 10 and the respective T-junctions. When non-return valves 9, 10 are open for working (and not test) operation of the actuator D2, appropriate check valves non-return valves (illustrated and discussed below) fluidically close the test circuit 1 compared to the machine circuit 2.

### Testing a rotary hydraulic motor with external drainage

According to the embodiment illustrated in Figures 1 and 2, the embodiment with non-return valves 9, 10 represents a solution adopted when fluid losses are to be controlled in linear actuators, e.g. a single-acting linear cylinder effect D1 or double-acting linear cylinder D2.

In the case of rotary type actuator tests (not illustrated), e.g. a hydraulic vane motor with external drainage towards the tank, a VP-controlled valve is provided (illustrated schematically in the top left-hand part of Fig.2) which in the open position allows drainage towards the S-tank and in the closed position prevents drainage.

In particular, in Fig.2, in the upper left part, there is a schematic illustration of the solution with valve VP shown in detail in Fig.ll, i.e. the system envisaged in the case of rotary hydraulic motors, in which it is necessary to set up an auxiliary pressurisation line LA in parallel with the pressurisation lines L1, L2 compared to the calibration circuit 3 and comprising an EV5 valve, which intercepts, i.e. actuates with pressurised fluid the valve which intercepts the drainage allowing fluid to drain from the motor to the tank S in the open position and blocking the drainage in the closed position.

Compared to the linear actuator test D1 and D2, the drainage is closed before pressurising lines L1, L2.

In this way, as the L1 line is connected to the motor discharge and the L2 line to the suction, when the EV1 valve is open and the valve EV2 is closed, the predefined test pressure coming from the calibration circuit 3 is distributed evenly so that pressure sensors X2 and X3 measure the same pressure because the volumes of the internal compartments of the rotary hydraulic motor are connected to each other via the internal leakage between the stator and rotor. This is therefore a similar configuration to the double-acting cylinder design illustrated above, with the addition of the auxiliary LA pressurisation line monitored by the EV5 valve.

Advantageously, for the purposes of finding the zero position, i.e. the introductory operation for finding the initial reference position of the slide valve 30 of the distribution valve unit (8, 80), the electronic control unit U via the pressure sensors X2 and X3 receives and recognises a combined pressure signal relative to the reference position of the slide valve 30 other than that detected in case of motor when the drainage is open. Preferably, the reference position or zero' is defined by a bypass between lines L1 and L2 so that X2 is equal to X3. When instead connected to the pressure branch RM and the drainage is open, the static pressure and/or the time course of the pressure measured at X2 and X3 is different from that measured at the reference or 'zero'. In this way, the control unit U is able to distinguish between the type of hydraulic actuator connected, i.e. whether it is a rotary hydraulic motor.

### Multi-user testing

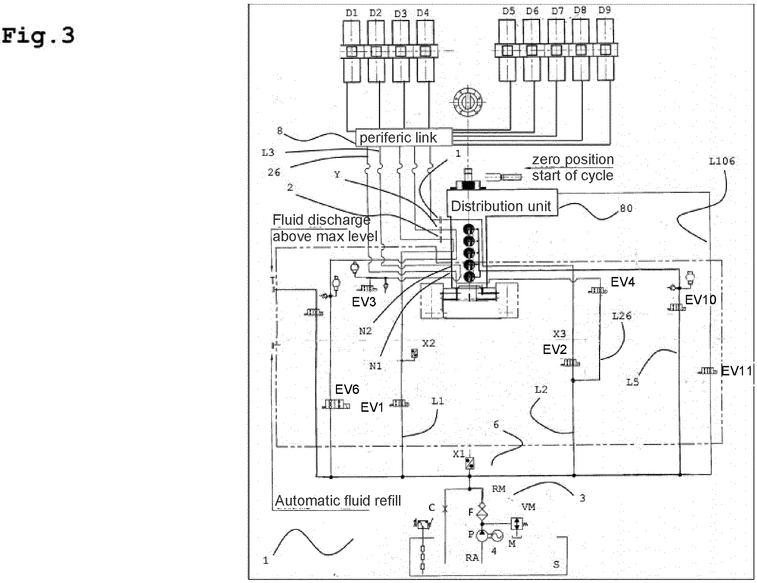

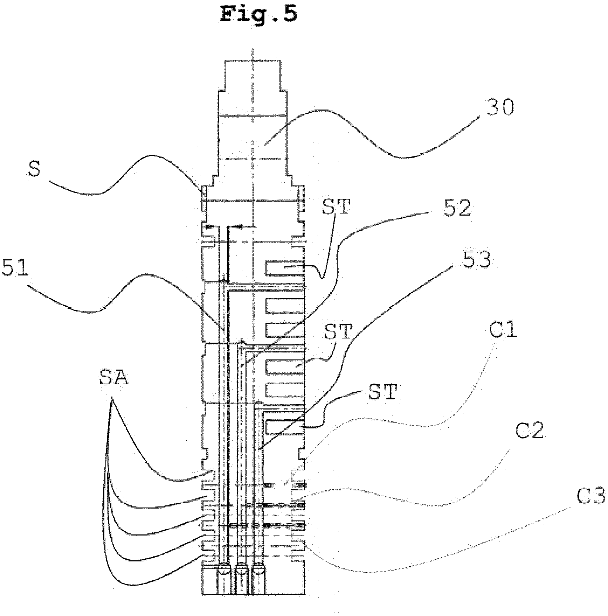

According to a further preferred embodiment, Fig.3 illustrates a general fluidic schematic general diagram of a test circuit 1 configured to test a plurality of connected linear actuators in parallel with each other in relation to the distribution valve 8 which therefore performs the function of sequencing, via a slide valve 30 which will be described in more detail below (illustrated in Fig.5) which assumes a plurality of positions, the utility under test i.e. connected to the calibration circuit 3 while the other consumers managed by the valve 8 are disconnected from it. In particular, the positions of the slide valve 30 of valve 8 are greater than or equal to the number of actuators connected to the valve itself. In this embodiment, the valve 8 has at least two test positions, 9 test positions are illustrated in the figure for corresponding connected actuators, and is interposed between the main portions 15, 16 of the pressurisation lines L1, L2 to fluidically connect the calibration circuit 3 to the distribution valve 8 and at least a first and a second portion of the branch lines 17, 18 (branching) for fluidically connecting the distribution valve 8 to each of the actuators D to be tested. It should be noted that, for each of the actuators to be tested, there are corresponding check valves 9, 10 e.g. incorporated in the corresponding valve VC and corresponding actuator lines 11, 12. Therefore, when there are at least two cylinders to be tested, the distribution circuit 6 comprises, for each actuator to be tested, a pair of branch portions 17, 18 and a pair of valves 9, 10, for defining the pressurisation lines L1, L2 of each actuator. The lines of each actuator 11, 12 are connected to a corresponding machine circuit (not illustrated) when the appropriate valves 9, 10 are switched to close test circuit 1 compared to the corresponding actuator.

In use, the position of slide valve 30 of distribution valve 8 is controlled via a hydraulic positioning actuator 25, i.e. a hydraulic drive mechanism 60. Preferably, the positioning actuator 25 is pressurized by means of a position switching line 26 arranged in parallel to the connection lines L1, L2 in relation to the calibration circuit 3. Along the switching line of position 26, there is an EV4 valve which can be connected in a closed position to a deactivated position of actuator 25 and in an open position which corresponds to a deactivated position of actuator 25, which consequently moves the slide valve 30 of the distribution valve 8 for connects the calibration circuit 3 to the next actuation D to continue the test. Subsequently illustrated a non-limiting embodiment of the actuator 25. The EV4 valve is connected by means of the U and, at each test position of the slide valve of the distribution valve 8, is performed one of the basic tests above described.

Preferably, the control unit U is programmed e.g. by means of a look-up table, to associate with each test position of the slide valve 30 the type of actuator connected to the calibration circuit 3, e.g. single D1 or double-acting actuator D2 and motor with external drainage, and consequently the correct test routine.

According to a preferred embodiment, the distribution valve 8 has a neutral position in order to realise a reset operation of the control unit, i.e. to search for an initial reference position of the system so that, after a step of the slide valve via the switching line of position 26 after this reference position the control unit starts reading the look up table from the first line, corresponding to the first actuator to be tested. In this way, the correct association between test type and actuator is made in open loop i.e. without slide valve position sensors 8 and without actuator recognition sensors associated with the given slide valve position. Therefore, the control unit is programmed to perform actuator tests according to a predetermined sequence and this sequence is started when the slide valve of the valve 8 is moved from the reference position to the first reference position to the first test position. For example, the slide valve has 4 positions of which one is the reference position and as the first test position, the operational test fluidic connection with a single-acting D1 actuator; as the second test position, the operational fluidic connection is made with a double-acting actuator D2; and as the third test position, the operational test fluidic connection operational test position with an external drainage motor.

Correspondingly, the control unit is programmed to perform test operations according to the sequence of actuator D1, actuator D2 and extended drainage motor.

This is achieved by means of a rotation of the slide valve 30 at a predefined angular position of the liner 31 of block 8, which puts into communication, i.e. realises a by-pass connection, the ports 1 and 2 of the distribution block 8. Subsequently, the control unit U closes the valve EV2 and opens the valve EVI and compares the pressure values measured by sensors X2 and X3. If these values are not equal, then the control unit U commands drive 60 which performs a rotation by positioning itself at a successive angular position and the operation of comparing the pressure values measured by X2 and X3 is repeated until they are equal. This means that the system is in the condition of by-pass, i.e. zero.

As can be seen in Fig. 3, when the hydraulic system to be tested comprises numerous actuators e.g. more than 20, there is a distribution unit 80 with a similar structure to the distribution group 8 illustrated in the first embodiment, which sequentially connects two or more distribution valves 8 to the calibration circuit 3, so that the latter, in turn, via the sequential positioning of the slide valve 30, connect fluidically the calibration circuit to the corresponding actuator to be tested. The distribution unit 80 has the control or 'master' function on a multiple 'slave' distribution valve.

To this end, control signals for actuating the seals 32 and control signals for sequential positioning of the slide valve 30 must be routed to the 'slave' distribution valves 8.

Therefore, the distribution assembly 80 comprises connection ports for the pressurised lines L1, L2, and also two further ports N1, N2 to which the seal control lines L3 and the circuit position switching lines 26 controlled by the valves EV3 and EV4, respectively, are connected.

Since it is often useful to also have the auxiliary pressurisation line LA, when the distribution valves 8 are provided with the corresponding Y ports (as in the figures), correspondingly, the distribution unit 80 is equipped with them for a total of five ports.

In particular, the five ports correspond to as many five lines running through valve 80.

Three of these are associated with outputs 1, Y and 2 and to the respective valves EV1, EV5 and EV2, as in the cases illustrated by the previous designs in Fig.1 and Fig.2; while the two additional lines serve for the actuation of the rotary slide valve 30 of valve 8 and for the pressurisation of the seals 32 of the slide valve 30 respectively.

More specifically, the N1 port to which the control line L3 of the seals is used for to the activation and release of seals 32 and controlled by the EV3 valve; whereas the N2 port to which the switching line of the position 26 is controlled by the EV4 valve and used to actuate the movement mechanism of the slide valve 30, which can only rotate when the seals 32 are relaxed, i.e. not pressurised; in order to engage with a predefined user.

Advantageously, line L106 via the valve EV11 actuates the angle stepper actuator of the valve 80 in a similar way as line 26 does for the actuator of valve 8.

Structurally, line L5 is a further fluidic line which is pressurised by the calibration circuit 3, similarly to lines L1 and L2, and positioned in parallel to the lines just mentioned and controlled by valve EV10 to actuate the five seals, i.e. the O-ring type rings housed in the seats of the rotary slide valve 30, of the valve assembly 80.

Functionally, the EV10 valve, actuates the five seals 32, of the valve assembly 80, in a similar manner as the EV3 valve actuates the three seals of valve 8, with the difference that the number of seals of valve 80 are five instead of three. Constructively, as illustrated schematically in Fig.1 and 2, the distribution valve 8 comprises two ports 19, 20 connected to the respective main portions 15, 16 of the pressurisation lines L1, L2 and a pair of branch ports 21, 22 respectively connected to the branch portions 17, 18 corresponding to the actuator to be tested. The distribution valve 8 therefore has a number of pairs of branch ports at least equal to the number of actuators to be tested.

Figs. 4A, 4B and 4C illustrate three views, of which two in section (4B and 4C), of a preferred but not limiting embodiment of the distribution valve 8, in order to describe the geometry of the internal structure.

In particular, Fig. 4A shows a front view of the distribution valve 8, comprising a slide valve 30, i.e. a cylinder having grooves and fluid passage holes, housed within a valve body 31, i.e. a structural body preferably a steel block.

According to a preferred embodiment, seals 32 are arranged between the slide valve 30 and the valve body 31 preferably carried by the slide valve and actuated to have a working position under load, wherein they seal the constructive clearance between the slide valve 30 and the valve body 31 at least for the ducts of the distribution valve 8 forming part of the pressurisation lines L1, L2, and a release position in which the seals 32 are unloaded. In particular, the slide valve 30 is movable, preferably rotating, in a valve body seat 31 having an internal surface 33 facing the slide valve and, in the operating position under load, the seals 32 are pressed in contact against the inner surface 33 so that the pressure and, if necessary, the flow rate passing along pressurisation lines L1 and L2 is maintained through the distribution valve 8, and housed inside corresponding seats ST. In particular, valve body 31 and slide valve 30 are elongated in the longitudinal direction of slide valve 30.

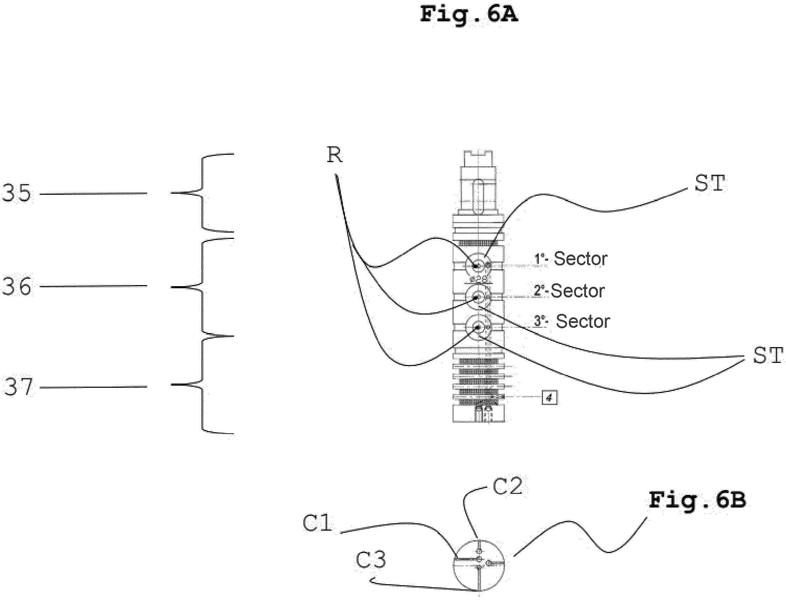

Fig. 4B shows a longitudinal section, along a plane passing through the rotation axis of the slide valve 30, and passing through ducts 51, 52 and 53 also visible in Fig.6 (bottom view). The fluidic ducts 40, 42, corresponding to the ducts 51, 53, connect the main portions 15, 16 of the pressurisation lines L1 and L2 with the distribution portions 17 and 18 towards the actuator to be tested. The ducts 51, 53 each have a portion substantially parallel to the rotation axis of slide valve 30 and a portion substantially perpendicular to the rotation axis, i.e. radial and facing the corresponding ducts 40, 42.

Similarly, structured is duct 52 fluidically connected to the auxiliary pressurised line LA and also benefiting from a corresponding seal 32.

Ducts 51, 52, 53 (illustrated below in Fig. 4C) have a so-called "L" shape and are obtained by means of drilling.

Fig. 4C shows a longitudinal section, made compared to a plane parallel to but distant from that of Fig. 4B, i.e. along the axis of a duct 50 (illustrated in detail in Fig.4), i.e. the duct which is located in the rotary slide valve 30 in a position offset from ducts 51, 52, 53, and for the pressurisation of the seals 32 by means of the pressurisation line L3. In particular, the ducts 50 connects the pressure branch RM of the calibration circuit 3 with the sealing system 32 through at least two ducts 45 in parallel to each other compared to the pressure branch RM, in order to simultaneously pressurise the seals 32 and the constructional clearance between the valve slide valve 30 and the valve body 31.

The distribution assembly 8 further comprises a connecting element (not illustrated), e.g. a block preferably made of steel and drilled internally to make fluidic ducts each corresponding to the internal ducts of the slide valve 30, i.e. the ducts 50, 51, 52, 53, and rigidly connected to the valve body 31, in order to facilitate its engagement with the duct portions of the pressurisation lines L1, L2 and thus the transport of the fluid pressure signal.

In particular, the pressurisation lines L1, L2 comprise both said block and the discrete positioning valves EV1, EV2, i.e. valves of on-off type compared to the fluid flow rate passing through them. The latter are interposed between the distribution valve 8 and the calibration circuit 3.

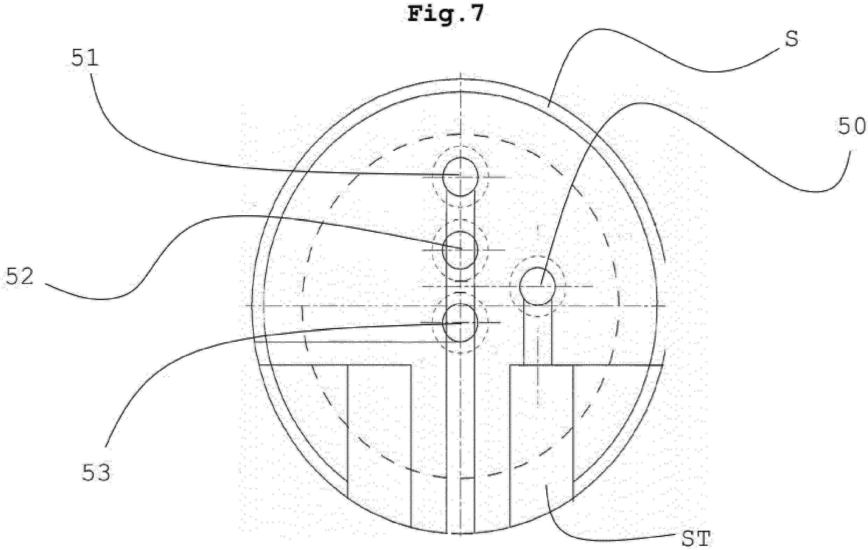

Advantageously, said block has perforations (not illustrated) positioned at the right, left and right, left, and lower sides respectively of said block itself. Said holes realise appropriate internal fluidic ducts, in particular the fluidic duct 28d connects, via a corresponding channel LP1 of the valve body 31 to the fluidic duct identified by hole 50 (visible also in Fig.7) of slide valve 30, the fluidic duct 28s connects via a corresponding duct LP1 of valve body 31, to duct 51. Further perforations not illustrated are respectively connected via the valve body 31 to the ducts 52 and 53; while the fluidic duct 28v. In this way is fluidic continuity is realised between the calibration circuit 3 and the slide valve 30 by means of said block.

In particular, LP1 is a fluidic duct through which a pressure signal flows for the activation of the fluidic ducts Cl, C2 and C3 (illustrated in Fig.5) connected via said block (not illustrated) to lines LI, L2.

Fig.5 shows a further longitudinal section of the slide valve 30 compared to a plane passing through the ducts 51, 52 and 53 (whose orifices are illustrated in detail in Fig.7), and illustrates in the lower part and in false section three radial ports Cl, C2 and C3 radially spaced angularly connected to the corresponding ducts 51, 52, 53 and separated in the vertical direction by annular seats for corresponding seal rings not illustrated. Each of the ports Cl, C2, C3 faces corresponding annular ducts of the inner surface 33 of the valve body 31 so as to ensure fluidic continuity, i.e. transmission by hydrostatic principle of the working fluid pressure, at each angular position angular position of the slide valve 30. In fact, each is connected to a corresponding duct LP1, LP2 etc., which via block 27 exchanges signals of pressure and flow rate to or from the EV1 solenoid valves, EV2 of pressurised lines L1, L2 and solenoid valve EV5 of the auxiliary pressurised line LA.

In addition, the figure shows R prominences for each orifices/holes of ducts 51, 52, 53 surrounded by the corresponding seal 32. In particular, the corresponding prominence R is also surrounded by the seal 32 of reference. The function of the prominences R will be described in more detail below.

Fig.6A shows, through a front view the constructive geometry of the rotating slide valve 30, comprising a cylindrical body, preferably in steel, housed inside the valve body 31, and having 3 overlapping portions, i.e. an upper portion 35, protruding from the valve body 31, shaped so as to allow the housing of the transmission parts of a drive mechanism 60 comprising at least one actuator 25, illustrated in side view in Fig. 4A, for the movement of the slide valve 30 in the case of the preferred form of multi-user realisation; a central portion 36 comprising the housings of at least two radial portions arranged vertically on as many levels and corresponding to channels 51, 53 extending internally to the rotor 30 and surrounded by the seals 32 housed within corresponding housings ST, for the interfacing of the calibration circuit 3 and of the actuator D; and finally a lower portion 37 comprising an area shaped the seats SA and pressurised, i.e. operated by means of hydraulic oil under pressure, by means of the feed channels Cl, C2 and C3 illustrated in Fig.5.

Fig.6B illustrates, by means of a section, the radial arrangement of the holes for pressurising the seals housed in portion 37 of slide valve 30 and realising the fluidic channels Cl, C2 and C3 as illustrated in Fig.5.

Fig.7 shows in detail an enlarged lower face enlarged lower face of slide valve 30. One can observe in particular the positioning of ducts 51, 52 and 53 so coplanar to a plane along the geometric axis of the slide valve 30 and duct 50 which is instead in a position distant from the plane of the previous ducts.

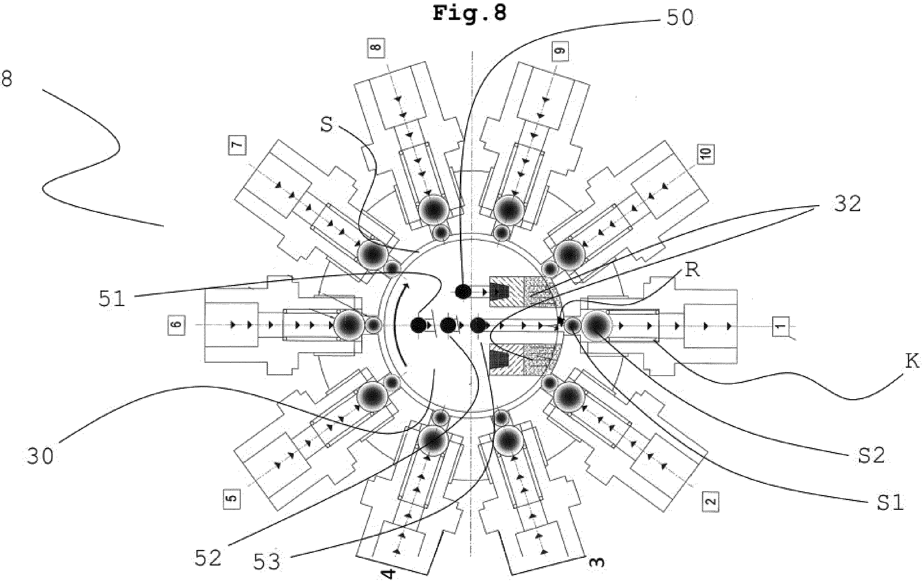

Fig.8 shows a section, in a transverse plane, of the distribution valve 8, in which one observes the "star" geometry of the distribution valve assembly 8 of the present invention, i.e. a radial engagement arrangement of the consumers indexed, in the example, with position numbers from 1 a 9. The position number 10 also corresponds to the reference or 'zero' position described above and whereby, by comparing two pressure signals on the pressurised lines L1, L2 a peculiar condition absent in any other test condition is identified. In particular, by actuating the actuator 25 the rotation of the slide valve 30 in a desired angular position, e.g. at the distribution portions 17, 18 relatives to one of the actuators D to be tested.

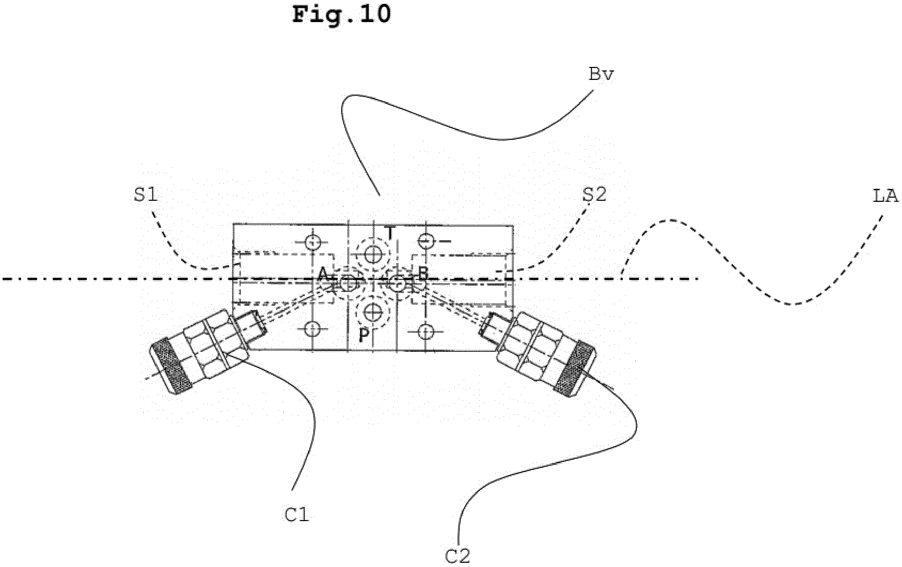

At each of these positions, a non-return valve arranged towards the actuator is provided on the valve body 31. This valve is closed by a spring and the pressure generated when the corresponding actuator is operated via its control valve VC. This pressure is conducted from the control valve VC (or actuator D) to the valve body 31 via the T-joints (illustrated in Fig.12) since the pilot-operated check valves 9, 10 are open. Therefore, the non-return valves of Fig. 10 prevent the working pressure of the actuator D when controlled by the control valve VC from reaching the setpoint circuit 3. It should be remembered that when the actuator D is operating, the distribution valve 8 is in the reference or 'zero' position.

Preferably, the reference or 'zero' position in which the pressurised lines L1, L2 are short-circuited upstream of the actuator is realised via a U-channel (not illustrated) carried by the valve body 30 which, precisely, connects fluidically from duct 51 to duct 53.

Furthermore, Fig.8 illustrates an annular groove S made on the cylindrical surface of the slide valve 30. This groove S, accommodates a projection R arranged inside the seats ST which, during the rotation of the slide valve 30 moves spheres S1 and S2 and, more specifically in particular, when the slide valve 30 reaches the angular position corresponding to the fluidic connection with an actuator to perform the test, keeps the non-return valve open. The spheres S1 and S2 are held in position pressed against the outer surface slide valve drawer 30 by a K spring.

When the slide valve 30, positioning itself in a rotational position corresponding to the fluidic connection of the actuator D associated with the calibration circuit 3, it pulls in solid rotation the risers R, one for each orifice/holes of the ducts 51, 52, 53 located inside the annular groove S.

Each of these risers R, orientated angularly together with the slide valve 30, is in a position to push and open a spherical S1 spacer which moves a sealing sphere S2 to open the hydrostatic fluidic connection to the actuator D even in no flow (condition illustrated in the figure).

In this way, the pressure and possibly the fluid reach the actuator associated with the angular position of the slide valve 30 while the seals 32 surround the fluid passage area and ensure the sealing of the pressurisation lines L1, L2 inside the distribution valve 8, even in the presence of the annular groove S.

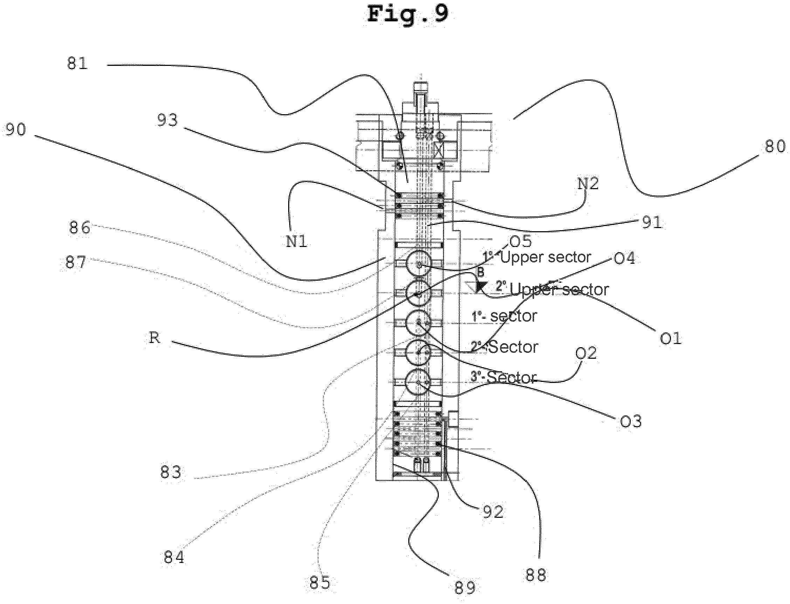

Fig.9 shows a partial section, made along the geometric axis of symmetry of the slide valve 81, of the valve assembly 80 in the case of a multi-user system, e.g. for a "master" and "slave" type system as illustrated above.

The valve assembly 80 retains and keeps identical the main constructional and functional characteristics described for the distribution assembly 8, including the geometry and operating logic, and adds to this embodiment fluidic ports, which are added to the ports 1, Y and 2 already present in the configuration illustrated in Fig.6A and respectively dedicated to distributing to two or more distribution valves 8, the fluidic control for pressurising the corresponding seals 32 and the fluidic control of the actuator 25 that drives the slide valve 30, both of these controls coming from the pressure present in the pressure branch RM of the circuit calibration circuit 3.

Advantageously, ports N1 and N2 as illustrated in Fig.9 are located in the upper portion of a valve body 90 of the valve group 80, in particular in the position above the ports indicated with 1', Y' and 2' as they are fluidically connected to the corresponding ports 1, Y, 2 of the distribution valve 8 selected by the valve train 80. In particular, the port N1 activates and deactivates the seals 32 and port N2 actuates the actuator 25 of the selected distribution valve 8 selected.

Constructively, the distribution valve 80 comprises a slide valve 81 with a cylindrical geometry similar to that of the slide valve 30, comprising a portion shaped to accommodate mechanical elements actuating elements to rotate the slide valve 81; a portion comprising cylindrical housings for the insertion of seals 82 around as many orifices/holes O1, O2, O3 corresponding to ports 1', Y', 2' and two further housings for two further seals 82 surrounding orifices O4 and O5 of the slide valve 81 fluidically connected to the corresponding ports NI, N2. The orifices/holes 04 and 05 correspond to corresponding fluidic ducts 86, 87 of the slide valve 81 having an L-shaped geometry one branch of which is parallel to the axis geometry of slide valve 81 and arranged above ducts 83, 84 and 85 slide valve drawer 81 corresponding the ports 1', Y' 2' with similar operation to the ducts 51, 52, 53 of the distribution valve 8 (Figures 4A, 4B, 4C); a lower portion comprising housings for further sealing rings seals 88 arranged and functioning similarly to the seals housed in the grooves SA of Fig.5; and finally a portion at the top of the slide valve 81 comprising further housing housings 93 of sealing rings 94 (not illustrated) which function for ducts 86, 87 in the same way as seals 88 function for the ducts 83, 84, 85 and respective orifices made on the liner 90 and shown with 91 and 92.

In particular, Fig.9 shows a front view of the slide valve 81, i.e. a cylinder having grooves and fluid passage holes, housed within the valve body 90, i.e. a structural body preferably a steel block.

Furthermore, by means of a dedicated actuator (not illustrated) preferably the same as actuator 25, the slide valve 81 is movable, preferably noting, in a seat of the valve body 90 having an inner surface 89 facing the slide valve 81 and, in the under-loaded working position, the seals 82 are pressed into contact with the inner surface 89. In particular, the seals 82 of the slide valve 81 are pressurised by the control line of the seals L5, and the slide valve 81 comprises a comb shaped duct 91 fluidically connected to the control line of the seals L3 and having five ramifications, i.e. two in more to match the seals 82 for the orifices 04, 05 than for the duct 50.

Advantageously, the seals 82 are preferably circular, e.g. cylindrical annular seals made of a preferably polymeric material and surround the fluidic connection areas between the valve body 90 and the valve slide valve 81.

The seals 82 are housed in a special annular seats, functionally identical to the seats 34 of Figure 4 formed on the body of the slide valve 81, each arranged around corresponding orifices of the slide valve 81 defining corresponding fluidic ducts of the valve body 90 (not fluidic ducts of the valve body 90 (not shown), and positioned on two different longitudinal levels between them, i.e. the ducts 83, 84, 85 at the bottom and the ducts 86, 87 at the top. According to the construction illustrated in Fig.9, the valve body 90 and slide valve 81 are elongated in the longitudinal direction of the slide valve 81.

Furthermore, the valve body 90 comprises channels 92 each of which connects the corresponding ducts 83, 84, 85 in the area of the seals 88 so that the ports 1', 2', Y' are part of the pressurisation lines L1, L2 and the auxiliary pressurisation line LA. Therefore, the channels 92 are functionally identical to channel LP1.

Similarly to the distribution valve 8, also the slide valve 81 comprises the prominence R in the proximity of each orifice O1, O2, O3, O4, O5 so as to open the corresponding non-return valves (not illustrated) functionally analogous to the S1, S2 valves.

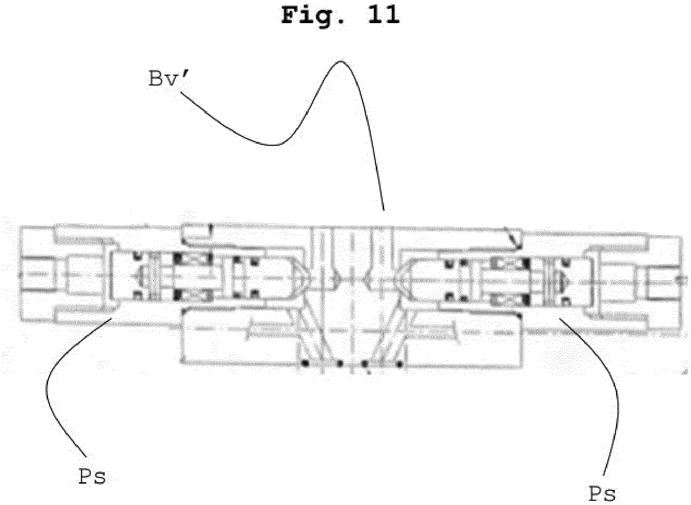

According to an embodiment illustrated in Fig. 10 a block Bv can be mounted immediately downstream of the valve VC and comprising piloted plungers Ps (shown in Fig. 11), as an alternative to the check valves 9, 10 which are instead integrated in the valve VC. The Bv block is useful when, as is sometimes the case, the Ve valve is not originally fitted with check valves 9, 10. In particular, the piloted plungers' Ps are actuated via the auxiliary pressurised line LA. In particular, the block Bv defines opposing seats SI, S2 in which the plungers Ps are housed (illustrated in Fig. 11) and is configured so that, when the plungers are withdrawn, fluidic communication between the actuator and the valve VC is interrupted, while fluidic communication of the actuator with the test circuit 1 remains active via the connectors Cl, C2 corresponding to the pressurised lines Li, L2. When the plungers Ps are retracted, fluidic communication between the actuator and the VC valve is restored, the test circuit being fluidically disconnected by means of the non-return valves preferably comprising the spheres SI, S2 (illustrated in Fig. 8) which are closed by means of the spring K.

Figure 11 illustrates an alternative and functionally analogous conformation Bv' to that of the block body Bv of Figure 10, in which are shown the plungers Ps.

Fig.12 shows a constructional section of a block making the T-joint 95 indicated above, and provided when the control valve VC does not incorporate the piloted non-return valves 9, 10, in which a piston Ps controlled by the auxiliary pressurised line LA is incorporated to selectively close one of the ports 11, 12, connected to the valve VC via a port 96. In this position of closure (illustrated in the figure), via the channel 97 oblique the duct 11, 12 is connected to the circuit test circuit 1. According to this form of realisation, the piston Ps is kept normally open by means of a spring not illustrated.

## Claims

1. Leak detection method of at least one hydraulic actuator (D) comprising the steps of:
- carrying out on a calibration circuit comprising a pump (P) and a pressure branch (RM) connected to the pressure side of the pump (P) an initial measurement of the flow rate in the pressure branch (RM), the flow rate generating a pressure in the pressure branch (RM) by passing through a restriction;
- connecting fluidically the pressure branch (RM) to a port of the hydraulic actuator (D) arranged in a blocking position while the pressure branch (RM) is crossed by the flow;
- taking a second measurement of the flow rate generated by the pump (P) while the pressure branch (RM) is fluidically connected to said port;
- determining whether there is a leakage on the basis of the comparison of the first and second flow measurement.

2. Method according to claim 1, comprising the step of receiving a pressure value in the pressure branch (RM) and in that the pump (P) is controlled to maintain constant said value of pressure during the measurements of the first and second flow rate.

3. Method according to any one of claims 1 or 2, comprising the further steps of:
- providing an additional actuator connected to said pressure branch (RM) in parallel to the at least one hydraulic actuator (D) to the pressure branch (RM);
- connecting fluidically at least one hydraulic actuator (D) or the additional actuator to said pressure branch (RM) in a predetermined sequence;
- carrying out, for each actuator, the steps of claim 1;
- generating, when a leak is detected, a signal comprising an identification code of the between at least one hydraulic actuator (D) and the further hydraulic actuator, connected to said supply branch (RM).

4. Method according to claim 3, wherein the calibration circuit (3) is connected to the at least one actuator and further actuator by means of a main distribution valve (80) receiving as input a pressure signal from the calibration circuit (3) and at least one first and one second secondary distribution valve (8) connected as input to the main distribution valve (80) to alternatively receive said pressure signal and selectively connected at the outlet to said actuators so that, for each combination of positions of the corresponding main and secondary distribution valves (80, 8) is fluidically connected to the calibration circuit (3) an actuator (D) to be tested and so that each of said combinations defines a step in said sequence predetermined sequence.

5. Method according to claim 4, wherein the pressure signal is transferred via at least one first line (LI, L2) passing through said main and secondary distribution valves (80, 8) and there is a first pressure sensor (X2; X3) is present along the first line (Li; L2) interposed between the supply branch (RM) and the distribution valve, and comprising the step of identifying a reference position of the slide valve (30; 81) based on the measurement of the first pressure sensor (X2; X3), the said sequence by identifying a known succession of said actuators starting from said reference position in order to realise an open-loop identification of the actuator tested on the basis of the counting the displacements of the slide valve from the reference position.

6. Method according to any one of claims 5, wherein at least one of the main and secondary valves (80, 8) comprises at least one seal (32) between the corresponding slide valve (30; 81) and valve body (31; 90); the seal selectively seals the first line (Li; L2); and comprising the steps of pressurising said seal (32) to seal the first line (LI; L2) when the corresponding slide valve (30; 81) is stopped and, for example, the first and second flow rates are measured, and to release said seal (32) before handling the slide valve (30; 81).

7. Method according to any one of claims 5 or 6, wherein the at least one actuator (D) is double-acting; the first line (L1; L2) connects the pressure branch (RM) to a first actuator chamber (D) and a second line (L2; L1) connects the pressure branch (RM) to the second actuator chamber (D); there is a second pressure sensor (X3; X2) along the second line (L2; L1) interposed between the pressure branch (RM) and the distribution valve; there is a first and a second shut-off valve (EVI, EV2) along the corresponding first and second lines (L1, L2) interposed between the corresponding first and second pressure sensor (X2, X3) and the pressure branch (RM); wherein which said connecting phase comprises the phases of closing one of the first and second shut-off valve (EVI, EV2) and keeping open the other between the first and second shut-off valves (EVI, EV2) to transfer the said pressure signal from the said pressure branch (RM) to one between the first and second chamber and determine whether there is a leakage between the first and second chambers on the basis of the trend in time of the pressure values measured by the first and second pressure sensors (X2, X3) .

8. Method according to any one of the preceding claims, wherein the pump (P) has a fixed displacement and the first and second flow rate measurements are performed by means of a measurement of the pump (P) speed.

9. Method according to any one of the preceding claims, wherein the at least one actuator (D) is controlled via a control valve (VC) to carry out a work operation, the control valve (VC) being connected in parallel to the calibration circuit (3) compared to the at least one actuator (D) and comprising the step of fluidically isolating the control valve (VC) from at least one actuator (D) while the first and second flow measurements are carried out.
